# EUROPEAN PATENT APPLICATION

(11) **EP 4 439 330 A1**
(43) Date of publication of application: **02.10.2024**
(21) Application number: 21967658.2
(22) Date of filing: 16.12.2021
(51) Int. Cl.: G06F 16/29, G06F 16/23, G06F 3/0481

(54) **METHOD AND APPARATUS FOR UPDATING MAP**

(71) Applicant: Huawei Technologies Co., Ltd., Shenzhen, Guangdong 518129 (CN)
(72) Inventor: ZHANG, Jing, Shenzhen, Guangdong 518129 (CN)
(74) Representative: Maiwald GmbH
(86) International application number: PCT/CN2021/138659
(87) International publication number: WO 2023/108523

(57) **Abstract**

Embodiments of this application provide a map update method and apparatus, and relate to the field of autonomous driving technologies. The method includes: A client generates a first message in response to a first operation of a user on a user interface, where the first message indicates to update a road network topology structure of a first map, and the road network topology structure includes at least one of a pose, a size, and a topology relationship of a map element; and the client sends the first message to a map server. In the method, an interface for dynamically updating a road network topology structure of a map is provided, so that the road network topology structure of the map can dynamically change based on requirements of different operation tasks, and the map can be flexibly applied to different operation task scenarios.

## Description

### TECHNICAL FIELD

This application relates to the field of autonomous driving technologies, and in particular, to a map update method and apparatus.

### BACKGROUND

With the rapid development of technologies, vehicle autonomous driving technologies are increasingly widely used, and are gradually applied to scenarios such as a port and an industrial park, to replace conventional manual driving control and further improve overall operation efficiency. For example, in a port scenario, when a new ship is to dock, a road related to a parking lot on a map used by a commercial vehicle needs to be updated based on an operation task.

In the conventional technology, a map server may generate a plurality of corresponding maps in advance based on a plurality of operation tasks. When a commercial vehicle needs to execute an operation task, the map server may switch to a map corresponding to the operation task. However, this implementation is not flexible enough to cover all operation tasks, and is not adaptable to operation task requirements.

### SUMMARY

Embodiments of this application provide a map update method and apparatus. An interface for dynamically updating a road network topology structure of a map is provided, so that the road network topology structure of the map can dynamically change based on requirements of different operation tasks, and the map can be flexibly applied to different operation task scenarios.

According to a first aspect, an embodiment of this application provides a map update method. The method may be performed by a client, or may be performed by a component (like a chip or a chip system) or the like configured in the client. This is not limited in this embodiment of this application.

For example, the method includes: A client generates a first message in response to a first operation of a user on a user interface (user interface, UI), where the first message indicates to update a road network topology structure of a first map, and the road network topology structure includes at least one of a pose, a size, and a topology relationship of a map element; and the client sends the first message to a map server.

Based on the foregoing technical content, the client may interact with the user through the UI, and generate, in response to the operation of the user, the first message indicating the map server to update the road network topology structure of the map. After receiving the first message, the map server may update the road network topology structure of the map based on the first message. In this way, the map can be flexibly applied to various operation task scenarios, and overall operation efficiency can be improved.

With reference to the first aspect, in a possible implementation, the map element includes a real map element and/or a virtual map element, and updating the road network topology structure of the first map includes one or more of the following: splitting or deleting one or more map elements on the first map, and adding a virtual map element to the first map.

Through one or more of map element split, map element deletion, and adding a virtual map element to the map, the map is increasingly applied to an operation task. In this way, operation efficiency can be improved.

With reference to the first aspect, in a possible implementation, the first operation includes uploading an operation task to the client, and the first message carries information about the operation task; or the first operation includes selecting a to-be-updated map element from the first map, and the first message carries a map update instruction, where the map update instruction indicates to update the to-be-updated map element.

When the first operation includes uploading the operation task to the client, the client may generate, in response to the operation of uploading the operation task by the user, the first message carrying the information about the operation task. In this implementation, the UI of the client needs to provide an interface used to upload the operation task for the user, so that the client can obtain the operation task uploaded by the user. Correspondingly, after receiving the information about the operation task carried in the first message, the map server may automatically update the road network topology structure of the first map based on the information about the operation task. This manner may be referred to as automatic map update for short.

When the first operation includes selecting the to-be-updated map element on the first map, the client may generate, in response to the operation of selecting, by the user, the to-be-updated map element on the first map displayed on the UI, the first message carrying the map update instruction. The map update instruction may indicate to update the to-be-updated map element. In this implementation, the UI of the client needs to provide, for the user, an interface for selecting the to-be-updated map element on the map displayed on the UI, so that the client can obtain information about the to-be-updated map element selected by the user. Correspondingly, when the first message received by the map server carries the map update instruction, update of the map element on the first map by the map server may be understood as update of the map element on the first map by the map server based on an operation of manually modifying the road network topology structure of the first map by the user. This manner may be referred to as manual map update for short.

In this case, an interface for automatic map update and an interface for manual map update are provided for the user on the UI of the client, so that the user can flexibly select a map update manner based on a requirement. In this case, an updated map meets a requirement of the operation task or the user.

With reference to the first aspect, in a possible implementation, the first operation includes selecting the to-be-updated map element on the first map, and the first message carries the map update instruction; and that a client generates a first message in response to a first operation of a user on a UI includes: The client converts pixel coordinates of the to-be-updated map element into map coordinates in response to selecting, by the user, the to-be-updated map element on the UI; and the client generates the map update instruction based on the map coordinates, where the map update instruction carries map coordinate information of the to-be-updated map element.

With reference to the first aspect, in a possible implementation, the first operation further includes selecting an update position of the to-be-updated map element on the first map, the map update instruction further carries map coordinate information of the update position, and the map coordinate information of the update position indicates a position for updating the to-be-updated map element.

In this possible implementation, the user may not only select the to-be-updated map element, but also specify an update position of the to-be-updated map element, so that a road network topology structure of the updated map is closer to an expectation of the user.

With reference to the first aspect, in a possible implementation, the uploading the operation task includes: entering or selecting a start point and a destination of the operation task on the first map; and that the client generates a first message in response to a first operation of the user on a UI includes: The client determines map coordinates of the start point and the destination of the operation task in response to entering or selecting the start point and the destination by the user on the first map on the UI; and the client generates the first message based on the map coordinates of the start point and the destination, where the first message carries the map coordinate information of the start point and the destination.

With reference to the first aspect, in a possible implementation, the method further includes: The client receives a path planning result from the map server, where the path planning result indicates a passable path planned for the operation task, and the passable path includes the virtual map element added to the first map.

In this possible implementation, the client may receive the path planning result from the map server, and the client may present the path planning result to the user on the UI, so that the user can determine, based on a requirement or personal experience, a final path used for the operation task. This helps improve operation efficiency.

With reference to the first aspect, in a possible implementation, the method may further include: The client obtains, based on one or more operation tasks, one or more of the following parameters: a right of way parameter of each road in a path corresponding to the one or more operation tasks, a passage attribute of each road in the path corresponding to the one or more operation tasks, and a capacity of each road and/or intersection in the path corresponding to the one or more operation tasks; and the client sends the one or more parameters to the map server, to update the road network topology structure of the first map.

The client obtains some parameters of the road and/or intersection, and sends the parameters to the map server. Then, the map server can update the road network topology structure of the first map based on the operation task and some parameters of the road and/or intersection, so that the updated road network topology structure of the map can better utilize road resources and balance road utilization while the requirement of the operation task is met. In this way, blockage caused by a large quantity of vehicles on a main road can be avoided, and operation efficiency is indirectly improved.

With reference to the first aspect, in a possible implementation, the method further includes: The client receives a second map from the map server, where the second map is obtained by the map server by updating the road network topology structure of the first map in response to the first message.

The client may receive the second map that is obtained after the first map is updated by the map server. In this way, the client may work based on the latest map, and the updated map is more applicable to a current operation task.

According to a second aspect, an embodiment of this application provides a map update method. The method may be performed by a map server, or may be performed by a component (like a chip or a chip system) or the like configured in the map server. This is not limited in this embodiment of this application.

For example, the method includes: A map server receives a first message from a client, where the first message indicates the map server to update a road network topology structure of a first map, and the road network topology structure includes at least one of a pose, a size, and a topology relationship of a map element; and the map server updates the road network topology structure of the first map based on the first message, to obtain a second map.

Based on the foregoing technical content, the map server receives, from the client, the first message indicating the map server to update the road network topology structure of the map. The map server may update the road network topology structure of the map based on the first message. In this way, the map can be flexibly applied to various operation task scenarios, and overall operation efficiency can be improved.

With reference to the second aspect, in a possible implementation, the map element includes a real map element and/or a virtual map element, and updating the road network topology structure of the first map includes one or more of the following: splitting or deleting one or more map elements on the first map, and adding a virtual map element to the first map.

Through map element split, map element deletion, or adding a virtual map element to the map, the map can meet a requirement of an operation task as much as possible, to improve operation efficiency.

With reference to the second aspect, in a possible implementation, the first message carries information about an operation task; or the first message carries a map update instruction, and the map update instruction indicates to update a to-be-updated map element.

After receiving the information about the operation task carried in the first message, the map server may automatically update the road network topology structure of the first map based on the information about the operation task. This manner may be referred to as automatic map update for short. When the first message received by the map server carries the map update instruction indicating to update the to-be-updated map element, it means that the map server updates the road network topology structure of the first map based on an operation of manually modifying the road network topology structure of the first map by the user. This manner may be referred to as manual map update for short.

An interface for automatic map update and an interface for manual map update are provided for the user, so that the user can flexibly select a map update manner based on a requirement. The map server may update the road network topology structure of the first map based on a map update manner selected by the user, so that an updated map meets a requirement of an operation task or a user.

With reference to the second aspect, in a possible implementation, the first message carries the map update instruction, and the map update instruction carries map coordinate information of the to-be-updated map element.

With reference to the second aspect, in a possible implementation, the map update instruction further carries map coordinate information of an update position, and the map coordinate information of the update position indicates a position for updating the to-be-updated map element.

In this possible implementation, the map server may not only update the road network topology structure of the first map based on the to-be-updated map element selected by the user, but also update the road network topology structure of the first map based on the update position of the to-be-updated map element specified by the user, so that the road network topology structure of the updated map is closer to an expectation of the user.

With reference to the second aspect, in a possible implementation, the first message carries the information about the operation task, and the first message carries map coordinate information of a start point and a destination of the operation task.

With reference to the second aspect, in a possible implementation, the first message carries the information about the operation task; and the method further includes: The map server generates a path planning result based on the information about the operation task, where the path planning result indicates a passable path planned for the operation task, and the passable path includes the virtual map element added to the first map; and the map server sends the path planning result to the client.

In this possible implementation, the map server may automatically plan, based on the map coordinate information that is of the start point and the destination of the operation task and that is carried in the first message, at least one passable path between the start point and the destination, generate a path planning result, and feed back the path planning result to the client, so that the client may present the path planning result to the user on the UI, and the user can determine a final path used for the operation task based on a requirement or personal experience. This helps improve operation efficiency.

With reference to the second aspect, in a possible implementation, the method further includes: The map server receives one or more of the following parameters from the client: a right of way parameter of each road in a path corresponding to the one or more operation tasks, a passage attribute of each road in the path corresponding to the one or more operation tasks, and a capacity of each road and/or intersection in the path corresponding to the one or more operation tasks; and the map server updates the road network topology structure of the first map based on the one or more parameters.

The map server may update the road network topology structure of the first map based on the operation task and some parameters of the road and/or the intersection, so that the updated road network topology structure of the map can better utilize road resources and balance road utilization while a requirement of the operation task is met. In this way, blockage caused by a large quantity of vehicles on the main road can be avoided, and operation efficiency is indirectly improved.

With reference to the second aspect, in a possible implementation, the method further includes: The map server sends the second map.

The map server may send, to the client and/or a vehicle, the second map obtained after the first map is updated. In this way, the client and/or the vehicle and the map server may operate based on the latest map, and the updated map is more applicable to the current operation task. In addition, the vehicle does not need to calculate the to-be-updated map element, so that calculation pressure of the vehicle can be reduced, operation efficiency can be improved, and driving safety of the vehicle can be improved.

With reference to the second aspect, in a possible implementation, the method further includes: The map server receives indication information from a vehicle, where the indication information indicates that a part or the entirety of a driving path of the vehicle is not a map element on the second map; and the map server updates the second map based on the indication information.

In this implementation, the map server may further update the map based on the new map element indicated in the indication information from the vehicle, so that the map is further applicable to the current operation task. This improves operation efficiency.

According to a third aspect, an embodiment of this application provides a map update method. The method may be performed by a vehicle, or may be performed by a component (like a chip or a chip system) or the like configured in the vehicle. This is not limited in this embodiment of this application.

For example, the method includes: A vehicle receives a second map from a map server, where the second map is obtained by updating a road network topology structure of a first map, and the road network topology structure includes at least one of a pose, a size, and a topology relationship of a map element; and the vehicle updates the first map to the second map.

Based on the foregoing technical content, the vehicle may receive the second map obtained through updating the first map by the map server, and update the locally stored first map to the second map. In this way, the vehicle can work based on the latest map, and the updated map is more applicable to a current operation task. In addition, the vehicle does not need to calculate a map element that needs to be updated, so that calculation pressure of the vehicle can be reduced, operation efficiency can be improved, and driving safety of the vehicle can be improved.

With reference to the third aspect, in a possible implementation, the method further includes: The vehicle sends indication information to the map server, where the indication information indicates that a part or the entirety of a driving path of the vehicle is not a map element on the second map, so that the map server performs map update.

In this implementation, the vehicle has a capability of autonomously discovering a passable map element, and may indicate the map server to perform update by sending, to the map server, indication information indicating a new map element, so that the map can further meet an operation requirement, and operation efficiency is improved.

According to a fourth aspect, an embodiment of this application provides a map update apparatus. The apparatus may be configured to perform the method according to any one of the first aspect or the possible implementations of the first aspect. The apparatus includes a corresponding module configured to perform the foregoing method. The module included in the apparatus may be implemented by using software and/or hardware.

For example, the map update apparatus includes a generation module and a sending module. The generation module is configured to generate a first message in response to a first operation of a user on a user interface UI, where the first message indicates to update a road network topology structure of a first map, and the road network topology structure includes at least one of a pose, a size, and a topology relationship of a map element. The sending module is configured to send the first message to a map server.

With reference to the fourth aspect, in a possible design, the map element includes a real map element and/or a virtual map element, and updating the road network topology structure of the first map includes one or more of the following: splitting or deleting one or more map elements on the first map, and adding a virtual map element to the first map.

With reference to the fourth aspect, in a possible design, the first operation includes uploading an operation task to the map update apparatus, and the first message carries information about the operation task; or the first operation includes selecting a to-be-updated map element from the first map, and the first message carries a map update instruction, where the map update instruction indicates to update the to-be-updated map element.

With reference to the fourth aspect, in a possible design, the first operation includes selecting the to-be-updated map element on the first map, and the first message carries the map update instruction. The generation module is specifically configured to: convert pixel coordinates of the to-be-updated map element into map coordinates in response to selecting, by the user, the to-be-updated map element on the UI; and generate the map update instruction based on the map coordinates, where the map update instruction carries map coordinate information of the to-be-updated map element.

With reference to the fourth aspect, in a possible design, the first operation further includes selecting an update position of the to-be-updated map element on the first map, the map update instruction further carries map coordinate information of the update position, and the map coordinate information of the update position indicates a position for updating the to-be-updated map element.

With reference to the fourth aspect, in a possible design, the uploading the operation task includes: entering or selecting a start point and a destination of the operation task on the first map. The generation module is specifically configured to: determine, map coordinates of the start point and the destination in response to entering or selecting, by the user, the start point and the destination of the operation task on the first map on the UI; and generate the first message based on the map coordinates of the start point and the destination, where the first message carries map coordinate information of the start point and the destination.

With reference to the fourth aspect, in a possible design, the map update apparatus further includes a receiving module. The receiving module is configured to receive a path planning result from the map server, where the path planning result indicates a passable path planned for the operation task, and the passable path includes the virtual map element added to the first map.

With reference to the fourth aspect, in a possible design, the map update apparatus further includes an obtaining module. The obtaining module is configured to obtain, based on the one or more operation tasks, one or more of the following parameters: a right of way parameter of each road in a path corresponding to the one or more operation tasks, a passage attribute of each road in the path corresponding to the one or more operation tasks, and a capacity of each road and/or intersection in the path corresponding to the one or more operation tasks. The sending module is further configured to send the one or more parameters to the map server, to update the road network topology structure of the first map.

With reference to the fourth aspect, in a possible design, the receiving module is further configured to receive a second map from the map server, where the second map is obtained by the map server by updating the road network topology structure of the first map in response to the first message.

According to a fifth aspect, an embodiment of this application provides a map update apparatus. The apparatus may be configured to perform the method according to any one of the second aspect or the possible implementations of the second aspect. The apparatus includes a corresponding module configured to perform the foregoing method. The module included in the apparatus may be implemented by using software and/or hardware.

For example, the map update apparatus includes a receiving module and an update module. The receiving module is configured to receive a first message from a client, where the first message indicates the map server to update a road network topology structure of a first map, and the road network topology structure includes at least one of a pose, a size, and a topology relationship of a map element. The update module is configured to update the road network topology structure of the first map based on the first message, to obtain a second map.

With reference to the fifth aspect, in a possible design, the map element includes a real map element and/or a virtual map element, and updating the road network topology structure of the first map includes one or more of the following: splitting or deleting one or more map elements on the first map, and adding a virtual map element to the first map.

With reference to the fifth aspect, in a possible design, the first message carries information about an operation task; or the first message carries a map update instruction, and the map update instruction indicates to update a to-be-updated map element.

With reference to the fifth aspect, in a possible design, the first message carries the map update instruction, and the map update instruction carries map coordinate information of the to-be-updated map element.

With reference to the fifth aspect, in a possible design, the map update instruction further carries map coordinate information of an update position, and the map coordinate information of the update position indicates a position for updating the to-be-updated map element.

With reference to the fifth aspect, in a possible design, the first message carries the information about the operation task, and the first message carries map coordinate information of a start point and a destination of the operation task.

With reference to the fifth aspect, in a possible design, the first message carries the information about the operation task. The map update apparatus further includes a generation module and a sending module. The generation module is configured to generate a path planning result based on the information about the operation task, where the path planning result indicates a passable path planned for the operation task, and the passable path includes the virtual map element added to the first map. The sending module is configured to send the path planning result to the client.

With reference to the fifth aspect, in a possible design, the receiving module is further configured to receive one or more of the following parameters from the client: a right of way parameter of each road in a path corresponding to the one or more operation tasks, a passage attribute of each road in the path corresponding to the one or more operation tasks, and a capacity of each road and/or intersection in the path corresponding to the one or more operation tasks. The update module is further configured to update the road network topology structure of the first map based on the one or more parameters.

With reference to the fifth aspect, in a possible design, the sending module is further configured to send the second map.

With reference to the fifth aspect, in a possible design, the receiving module is further configured to receive indication information from a vehicle, where the indication information indicates that a part or the entirety of a driving path of the vehicle is not a map element on the second map. The update module is further configured to update the second map based on the indication information.

According to a sixth aspect, an embodiment of this application provides a map update apparatus. The apparatus may be configured to perform the method according to any one of the third aspect or the possible implementations of the third aspect. The apparatus includes a corresponding module configured to perform the foregoing method. The module included in the apparatus may be implemented by using software and/or hardware.

For example, the map update apparatus includes a receiving module and an update module. The receiving module is configured to receive a second map from a map server, where the second map is obtained by updating a road network topology structure of a first map, and the road network topology structure includes at least one of a pose, a size, and a topology relationship of a map element. The update module is configured to update the first map to the second map.

With reference to the sixth aspect, in a possible design, the map update apparatus further includes a sending module configured to send indication information to the map server, where the indication information indicates that a part or the entirety of a driving path of the vehicle is not a map element on the second map, so that the map server performs map update.

According to a seventh aspect, an embodiment of this application provides a map update apparatus. The map update apparatus includes a processor. The processor is coupled to a memory, and may be configured to execute a computer program in the memory, to implement the map update method according to any one of the first aspect and the possible implementations of the first aspect, or implement the map update method according to any one of the second aspect and the possible implementations of the second aspect, or implement the map update method according to any one of the third aspect and the possible implementations of the third aspect.

Optionally, the map update apparatus further includes a memory.

Optionally, the map update apparatus further includes a communication interface, and the processor is coupled to the communication interface.

According to an eighth aspect, an embodiment of this application provides a chip system. The chip system includes at least one processor, configured to support implementation of the function in any one of the first aspect and the possible implementations of the first aspect, or configured to support implementation of the function in any one of the second aspect and the possible implementations of the second aspect, or configured to support implementation of the function in any one of the third aspect and the possible implementations of the third aspect, for example, receiving or processing data, a message, indication information, or the like in the foregoing method.

In a possible design, the chip system further includes a memory, the memory is configured to store program instructions and data, and the memory is located inside the processor or outside the processor.

The chip system may include a chip, or may include a chip and another discrete component.

According to a ninth aspect, an embodiment of this application provides a computer-readable storage medium. The computer storage medium stores a computer program (which may also be referred to as code or instructions). When the computer program is run by a processor, the method according to any one of the first aspect and the possible implementations of the first aspect is performed, or the method according to any one of the second aspect and the possible implementations of the second aspect is performed, or the method according to any one of the third aspect and the possible implementations of the third aspect is performed.

According to a tenth aspect, an embodiment of this application provides a computer program product. The computer program product includes a computer program (which may also be referred to as code or instructions). When the computer program is run, the method according to any one of the first aspect and the possible implementations of the first aspect is performed, or the method according to any one of the second aspect and the possible implementations of the second aspect is performed, or the method according to any one of the third aspect and the possible implementations of the third aspect is performed.

According to an eleventh aspect, an embodiment of this application provides a vehicle, and the vehicle corresponds to the map update apparatus according to the sixth aspect or the seventh aspect, for example, may be the map update apparatus according to the sixth aspect or the seventh aspect, or may include the map update apparatus according to the sixth aspect or the seventh aspect.

It should be understood that the technical solutions in the fourth aspect to the eleventh aspect in embodiments of this application correspond to the technical solutions in the first aspect to the third aspect in embodiments of this application. Beneficial effects achieved in the aspects and corresponding feasible implementations are similar. Details are not described again.

### BRIEF DESCRIPTION OF DRAWINGS

FIG. 1 is a schematic diagram of an intersection according to an embodiment of this application;
FIG. 2 is a schematic diagram of a road network topology structure according to an embodiment of this application;
FIG. 3 is a schematic diagram of a system applicable to a map update method according to an embodiment of this application;
FIG. 4 is a schematic flowchart of a map update method according to an embodiment of this application;
FIG. 5 is a schematic diagram of road splitting according to an embodiment of this application;
FIG. 6 is a schematic flowchart of another map update method according to an embodiment of this application;
FIG. 7 is a schematic flowchart of still another map update method according to an embodiment of this application;
FIG. 8 is a schematic flowchart of yet another map update method according to an embodiment of this application;
FIG. 9 is a schematic block diagram of a map update apparatus according to an embodiment of this application;
FIG. 10 is a schematic block diagram of another map update apparatus according to an embodiment of this application;
FIG. 11 is a schematic block diagram of still another map update apparatus according to an embodiment of this application; and
FIG. 12 is a schematic block diagram of yet another map update apparatus according to an embodiment of this application.

### DESCRIPTION OF EMBODIMENTS

The following describes technical solutions in embodiments of this application with reference to the accompanying drawings.

With the rapid development of technologies, vehicle autonomous driving technologies are increasingly widely used, and are gradually applied to scenarios such as a port and an industrial park, to replace conventional manual driving control and further improve overall operation efficiency.

For example, in a port scenario, the entire wharf may be roughly divided into a landside area and a seaside area based on functions. The seaside area is an area for loading and unloading boxes, and may be divided into several berths. A range of each berth is related to a size and a parking position of a ship. When a new ship is to dock, to improve operation efficiency, it is impossible for a vehicle to enter or exit a quay crane only on two segments of a quay-crane road. Usually, an entrance lane of a quay crane is set at a tail of a ship and an exit lane of the quay crane is set at a head of the ship based on a parking position of the ship. In some operation task scenarios, these roads are not physical, and usually need to be dynamically generated based on a task requirement. A commercial vehicle needs to perform operations according to an operation task plan. In most cases, a road related to a parking lot on the map used by the commercial vehicle needs to be updated to adapt to a different operation task.

For the foregoing problem, in the conventional technology, a plurality of maps corresponding to a plurality of operation tasks are generated in advance based on the plurality of operation tasks, and when a commercial vehicle needs to execute a specific operation task, the map may be switched to a map corresponding to the operation task. However, this implementation is not flexible enough to cover all operation tasks, and is not adaptable to operation task requirements. In addition, when there are a large quantity of operation task scenarios, a large quantity of maps need to be generated. In this case, data storage pressure is high.

Embodiments of this application provide a map update method and apparatus. An interface for updating a road network topology structure of a map is provided on a client, and the client may trigger, in response to a user operation, a map server to update the road network topology structure of the map. By updating one or more of a pose, a size, and a topology relationship of a map element, a static layer of the map is also updated. In this way, the map can be flexibly applied to various operation task scenarios.

It should be noted that, in the conventional technology, an attribute of a road is determined at a static layer after road construction is completed. The attribute of the road may include physically visible information such as a position, a length, a width, and a lane line of the road. These attributes do not change unless the road is refurbished. However, according to the map update method provided in this application, a static layer of a map may be updated.

This solution may be applied to production scenarios such as a port, a mine, and a closed industrial park. In this way, vehicles can be managed and scheduled in a unified manner in the corresponding areas. This helps vehicles work in an orderly manner. The map is updated, so that the map can be flexibly applied to various tasks corresponding to different vehicles. The solution may be further applied to a passenger vehicle environment, for example, a highway toll station, a garage, or a bus station. The map is updated, so that the map can be flexibly applied to various operation tasks corresponding to different vehicles as much as possible. This is not limited in embodiments of this application.

It should be noted that the map update method and apparatus in embodiments of this application can be applied to the Internet of Vehicles, for example, vehicle to everything (vehicle to everything, V2X), a long term evolution-vehicle (long term evolution-vehicle, LTE-V) technology, or vehicle to vehicle (vehicle to vehicle, V2V). For example, the method and the apparatus may be applied to a vehicle having a driving-to-move function, or another apparatus having a driving-to-move function in a vehicle. The another apparatus includes but is not limited to a vehicle-mounted terminal, a vehicle-mounted controller, a vehicle-mounted module, a vehicle-mounted assembly, a vehicle-mounted component, a vehicle-mounted chip, a vehicle-mounted unit, or another sensor like a vehicle-mounted radar or a vehicle-mounted camera. The vehicle may implement the vehicle control method provided in embodiments of this application by using the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera. The control solution in embodiments of this application may be further applied to another smart terminal that needs to update a map based on an operation task other than a vehicle, or disposed in another smart terminal that needs to update a map based on an operation task other than a vehicle, or disposed in a component of the smart terminal. The smart terminal may be a smart transportation device, a smart home device (for example, a robot vacuum cleaner), a robot, or the like, for example, including but not limited to a smart terminal or a controller in a smart terminal, a chip, another sensor like a radar or a camera, another component, or the like.

To clearly describe technical solutions in embodiments of this application, terms such as "first" and "second" are used in embodiments of this application to distinguish between same items or similar items that provide basically same functions or purposes. For example, a first map and a second map are merely used to distinguish between different maps, and a sequence of the first map and the second map is not limited. A person skilled in the art may understand that the terms such as "first" and "second" do not limit a quantity and an execution sequence, and the terms such as "first" and "second" do not indicate a definite difference.

It should be noted that, in embodiments of this application, "at least one" means one or more, and "a plurality of means two or more. The term "and/or" describes an association relationship between associated objects and represents that three relationships may exist. For example, A and/or B may indicate the following cases: Only A exists, both A and B exist, and only B exists, where A and B may be singular or plural. The character "/" usually indicates an "or" relationship between associated objects. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

The following briefly describes some terms and concepts in embodiments of this application.

1. Map element: The map element in embodiments of this application may be a road or an intersection (which may also be referred to as a road intersection, a road junction, a junction, or the like). The map element in embodiments of this application may include a real map element and a virtual map element. The real map element may be understood as a road or an intersection that actually exists in a real operation scenario, for example, a road identified by a lane line drawn on the ground. The virtual map element may be understood as a road or an intersection that is visible on a map but does not actually exist in a real operation scenario, for example, a road that is displayed on a map but is not marked by a lane line in a real operation scenario.

In embodiments of this application, an intersection is a point at which one or more roads converge or diverge. Roads associated with the intersection may be classified into an incoming road (incoming road) or an outcoming road (outcoming road) based on a vehicle flow direction or a pedestrian flow direction on the road. The incoming road may also be referred to as an upstream road of the intersection, and the outcoming road may also be referred to as a downstream road of the intersection.

In embodiments of this application, a quantity of upstream/downstream roads at any intersection may be restricted. To be specific, a capacity of an upstream/downstream road at each intersection on a map may be set. The capacity may be understood as a maximum allowed vehicle flow and/or a maximum allowed pedestrian flow. A quantity of upstream roads or a quantity of downstream roads at an intersection may be greater than or equal to 1, or may be 0. For example, one intersection may be associated with only an upstream road, or may be associated with only a downstream road, or may be associated with only one upstream road and one downstream road, or may be associated with one upstream road and at least two downstream roads, or may be associated with at least two upstream roads and one downstream road. Details are not described herein again.

In different operation scenarios, there are different requirements for an intersection. Therefore, an intersection may be further pre-defined based on a map or the like required by the operation scenario, to determine which positions in a target area may be defined as intersections and which information may be used for intersection traffic management.

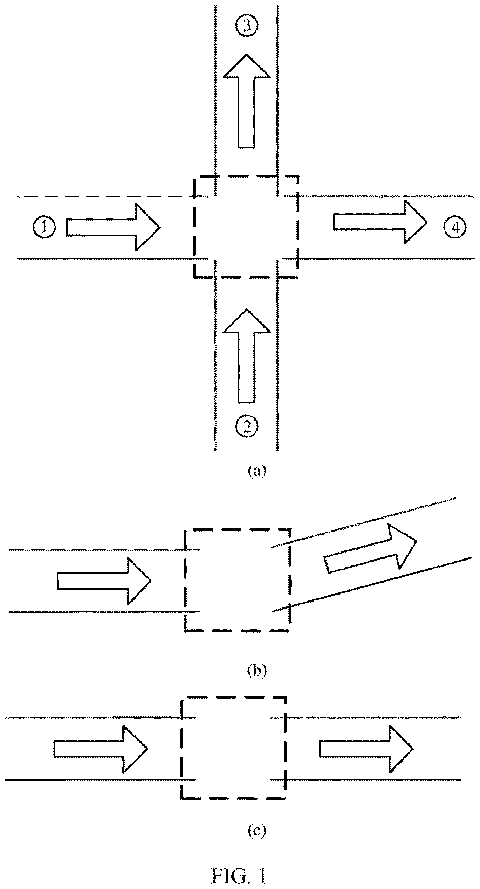

FIG. 1 shows three example intersections.

Refer to FIG. 1. In (a) in FIG. 1, a dashed-line box is a common cross intersection. The cross intersection may have two upstream roads and two downstream roads, which are represented as upstream roads 1 and 2 and downstream roads 3 and 4. Based on a vehicle flow direction, a vehicle from the upstream road 1 or 2 may travel through the cross intersection to the downstream road 3 or 4. On the contrary, without breaking a traffic rule, the roads 3 and 4 may be used as upstream roads, the roads 1 and 2 may be used as downstream roads, and a vehicle from the road 3 or 4 may travel through the cross intersection to the road 1 or 2. Similarly, a quantity of upstream roads or a quantity of downstream roads in (a) in FIG. 1 may be greater or less, and a cross type of the intersection is not limited to that shown in the figure. Details are not described herein again.

In (b) in FIG. 1, a dashed-line box is an intersection located at a road curve. When a road curve is large, it is difficult for a vehicle (for example, a large-sized vehicle with poor mobility performance) to continue to travel in an original lane at the curve. Therefore, a behavior of vehicle lane change frequently occurs at the curve. Therefore, the curve may be set as an intersection, to facilitate management of a vehicle that needs to travel through the curve.

In (c) in FIG. 1, a dashed-line box is a part of a straight road, and the part may be used for lane change by a vehicle, or may be considered as a road intersection. This type of intersection is usually used in some specific scenarios such as a commercial production environment. Based on a production requirement, a part of a straight road is used as a part specially for a vehicle to perform lane change, so that when the vehicle travels to the intersection, the vehicle can perform lane change.

In an actual application, intersection requirement information may be used to describe various required intersections, for example, the intersections shown in (a) in FIG. 1, (b) in FIG. 1, and (c) in FIG. 1. The intersection requirement information may be provided by an operator through a UI of a client based on a requirement of an operation task. The intersection requirement information may be a natural language, or a machine language that can be understood by a machine and a program, or another proper language description. This is not limited in embodiments of this application.

Any intersection or road may be an intersection or a road that actually exists in the physical world, or may be an intersection or a road that is generated on a map based on an operation task requirement. When the operation task requirement changes, a different intersection or road may be generated.

It should be understood that the three examples in FIG. 1 are merely examples for describing but not limiting intersections to which embodiments of this application are applicable. In another embodiment, another type of intersection may be defined with reference to an actual operation task requirement, a site, or the like. A manner of determining a type and a position of a required intersection is not limited in embodiments of this application.

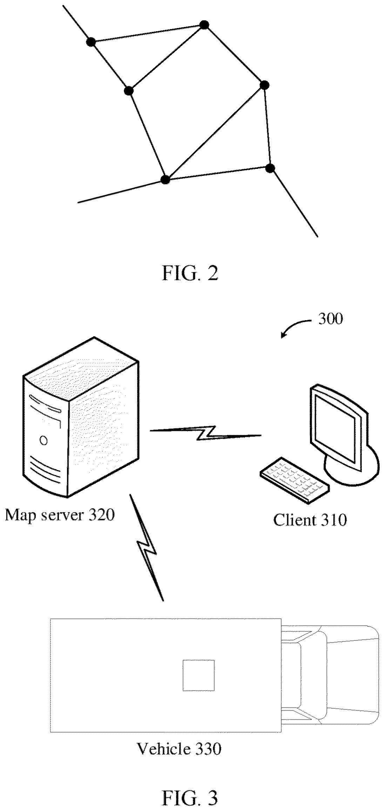

2. Road network topology structure: The road network topology structure may be formed by interconnected map elements. For example, the road network topology structure may be formed by several roads and intersections. As shown in FIG. 2, a line segment is used to represent a road, a dot is used to represent an intersection, two endpoints of each road are intersections, and one intersection may be an intersection point of several roads.

The following describes the map update method and apparatus provided in embodiments of this application with reference to the accompanying drawings.

FIG. 3 is a schematic diagram of an architecture of a system according to an embodiment of this application. A system 300 shown in FIG. 3 includes a client 310, a map server 320, and a vehicle 330. The client 310 may communicate with the map server 320, and the map server 320 may communicate with the vehicle 330.

It should be understood that FIG. 3 is merely an example. In an actual application scenario, the map server may be one server, or may be a server cluster including a plurality of servers. The map server may be deployed on a cloud. This is not limited in this application. The vehicle shown in FIG. 3 may be a commercial vehicle, or may be a passenger vehicle. In addition, the map server may communicate with a plurality of clients, or the map server may communicate with a plurality of vehicles. A quantity of clients and a quantity of vehicles are not limited in embodiments of this application.

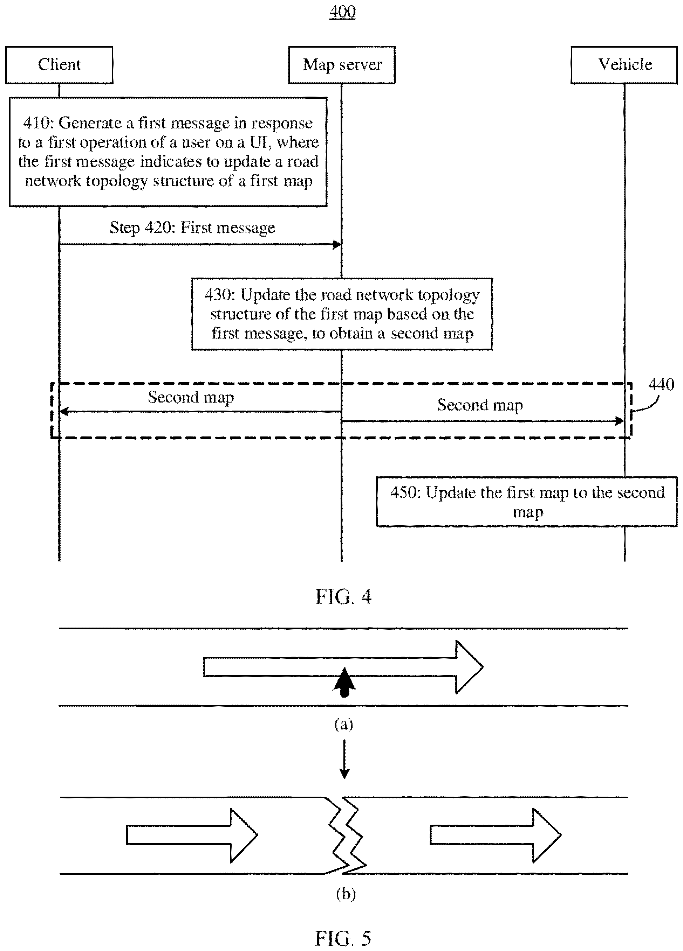

FIG. 4 is a schematic flowchart of a map update method according to an embodiment of this application. The method 400 includes Step 410 to Step 450. The following describes Step 410 to Step 450 in detail.

In step 410, the client generates a first message in response to a first operation of the user on a UI, where the first message indicating to update a road network topology structure of a first map.

The client may provide an interface for updating the road network topology structure of the map. When the user performs the first operation on the UI of the client, the client may generate, in response to the first operation of the user, the first message indicating to update the road network topology structure of the first map.

As described above, the road network topology structure may be formed by interconnected map elements, and the map elements may include a road, an intersection, and the like. Updating the road network topology structure of the first map may be understood as updating at least one of a pose, a size, and a topology relationship of a map element on the first map. The pose of the map element may be understood as a position and a posture (or an orientation) of the map element. For example, the pose of the road may be understood as a position and an orientation (for example, an east-west direction or a north-south direction) of the road. The road may have various shapes, for example, a straight road, a C-shaped road, and an S-shaped road. The size of the map element may be understood as a shape, a length, a width, and the like of the map element. The topology relationship of the map element is a connection relationship of the map element, that is, a connection relationship between roads at an intersection, for example, the connection relationship between roads at the intersection shown in FIG. 2.

It should be noted that the map element in embodiments of this application may include a real map element and/or a virtual map element, and updating the road network topology structure of the first map may include one or more of the following: splitting or deleting one or more map elements on the first map, and adding a virtual map element to the first map.

The real map element includes a real road and/or a real intersection. The real road is a road that actually exists and that is represented by lane lines drawn on the ground in a real-world scenario. The real intersection is a real intersection formed because of intersection a plurality of real roads. The virtual map element includes a virtual road and/or a virtual intersection. The virtual road is a road that does not exist in a real-world scenario. The virtual road is displayed only on a map but is not represented by drawn lane lines in the real-world scenario. The virtual intersection is an intersection formed because of intersection of a plurality of virtual roads displayed on the map. The virtual intersection does not exist in the real-world scenario.

Splitting a map element may be, for example, splitting a real road, a virtual road, a real intersection, or a virtual intersection on a map. Deleting a map element may be, for example, deleting a real road, a virtual road, a real intersection, or a virtual intersection on a map, so that the real road, the virtual road, the real intersection, or the virtual intersection is not displayed on the map. Adding a virtual map element to the first map may be adding a virtual road or a virtual intersection to the first map.

Through one or more of map element split, map element deletion, and adding a virtual map element to the map, the map can meet a requirement of an operation task as much as possible, to improve operation efficiency.

In a possible implementation, the first operation may include uploading an operation task to the client, and the first message may carry information about the operation task; or the first operation may include selecting a to-be-updated map element from the first map, and the first message may carry a map update instruction, where the map update instruction indicates to update the to-be-updated map element.

When the first operation includes uploading the operation task to the client, the client may generate, in response to the operation of uploading the operation task by the user, the first message carrying the information about the operation task. In this possible implementation, the UI of the client needs to provide an interface used to upload the operation task for the user, so that the client can obtain the operation task uploaded by the user. Correspondingly, after receiving the information about the operation task carried in the first message, the map server may automatically update the road network topology structure of the first map based on the information about the operation task. This manner may be referred to as automatic map update for short.

Optionally, in this manner of automatic map update, the uploading the operation task may include: entering or selecting a start point and a destination of the operation task on the first map; and that the client generates a first message in response to a first operation of the user on a UI includes: The client determines map coordinates of the start point and the destination of the operation task in response to entering or selecting the start point and the destination by the user on the first map on the UI; and the client generates the first message based on the map coordinates of the start point and the destination, where the first message carries the map coordinate information of the start point and the destination.

It may be understood that, the uploading the operation task may include entering the start point and the destination of the operation task on the first map, or the operation task may include selecting the start point and the destination of the operation task on the first map. The client may convert, based on the start point and the destination that are of the operation task and that are entered or selected by the user, pixel coordinates of pixels corresponding to the start point and the destination that are on the first map displayed on the UI into map coordinates represented in a form of longitude and latitude, and generate the first message that carries the map coordinate information of the start point and the destination. In addition, when the uploading the operation task includes selecting the start point and the destination of the operation task on the first map, the first message generated by the client may also carry the pixel coordinates of the start point and the destination. After the map server receives the first message, the map server may convert the pixel coordinates of the start point and the destination into the map coordinates of the start point and the destination. Alternatively, when the uploading the operation task includes entering the start point and the destination of the operation task on the first map, the first message generated by the client may also carry the start point and the operation that are entered by the user, and the map server may determine the corresponding map coordinates based on the start point and the destination that are entered by the user. This is not limited in this embodiment of this application.

Optionally, in this manner of automatic map update, that is, when the first message carries the information about the operation task, the method may further include: The map server generates a path planning result based on the information about the operation task, where the path planning result may indicate a passable path planned for the operation task, and the passable path includes the virtual map element added to the first map; and the map server sends the path planning result to the client. Correspondingly, the client receives the path planning result from the map server.

In this implementation, the map server may automatically plan, based on the map coordinate information that is of the start point and the destination of the operation task and that is carried in the first message, at least one passable path between the start point and the destination, generate a path planning result, and feed back the path planning result to the client, so that the client may present the path planning result to the user on the UI, and the user can determine a final path used for the operation task based on a requirement. In the at least one passable path planned by the map server, at least one passable path includes at least one virtual map element added to the first map. It may also be understood that when performing path planning for the operation task based on the map coordinate information that is of the start point and the destination of the operation task and that is carried in the first message, the map server updates a road network structure of the first map, and the planned passable path includes a virtual map element that does not exist on the first map.

For example, after receiving the first message that carries the map coordinate information of the start point and the destination of the operation task, the map server may determine whether the start point and the destination are reachable from each other in the road network topology structure of the first map. If the start point and the destination are reachable from each other, the map server plans at least one passable path based on the road network topology structure of the first map, and adds at least one virtual map element based on the start point and the destination, so that costs (which may be a passage time or a passage distance) of passage from the start point to the destination is not less than passage costs of the passable path that is based on the road network topology structure of the first map. In other words, when the map server determines that the start point and the destination are reachable from each other, the path planning result includes at least one passable path that is based on the road network topology structure of the first map and at least one passable path that is updated based on the road network topology structure of the first map and that includes the added virtual map element. If the start point and the destination are not reachable from each other, the map server may update the road network topology structure of the first map, and add a virtual map element to the first map, so that the start point and the node are reachable from each other. In this case, the path planning result includes at least one passable path that is updated based on the road network topology structure of the first map and that includes the added virtual map element.

Optionally, in the foregoing manner of automatic map update, the method may further include: The client obtains, based on one or more operation tasks, one or more of the following parameters: a right of way parameter of each road in the path corresponding to the one or more operation tasks, a passage attribute of each road in the path corresponding to the one or more operation tasks, and a capacity of each road and/or intersection in the path corresponding to the one or more operation tasks; and the client sends the one or more parameters to the map server, to update the road network topology structure of the first map. Correspondingly, the map server receives the foregoing one or more parameters from the client, and updates the road network topology structure of the first map based on the foregoing one or more parameters.

The right of way parameter may indicate an importance degree of a road. For example, a right of way parameter of a trunk road is greater than a right of way parameter of a branch road. Usually, in a passenger vehicle scenario, a right of way parameter of an important road (for example, an emergency lane, a fire lane, or a main production road) may be greater than a right of way parameter of a common road. In a commercial vehicle scenario, a right of way parameter of a road on which an operation facility or a production device is disposed is greater than a right of way parameter of a road on which no operation facility or production device is disposed. The passage attribute of the road may indicate whether the road is an upstream road or a downstream road, whether the road is passable, or the like. A capacity of a road and/or intersection may be understood as a maximum vehicle flow and/or a maximum pedestrian flow allowed to pass through the road and/or intersection. It should be understood that the right of way parameter of the road, the passage attribute of the road, and the capacity of the road and/or intersection may be prestored in the map server. Alternatively, the user may change or set a right of way parameter of any road, a passage attribute of any road, and a capacity of any road and/or any intersection through the UI of the client.

In this implementation, the client may obtain the foregoing one or more parameters based on one operation task or a plurality of operation tasks that may be performed simultaneously, and send the obtained parameter to the map server. After receiving the parameter, the map server may generate at least one optional solution for updating the road network topology structure of the first map, and may send the optional solution to the client. Then the client can present the optional solution to the user on the UI. In this case, the user determines an update solution from the at least one optional solution for updating the road network topology structure of the first map, and indicates, by using the client, the map service to update the road network topology structure of the first map server based on the update solution.

The road network topology structure of the first map is updated based on the operation task and some parameters of the road and/or intersection, so that an updated road network topology structure of the map can better utilize road resources and balance road utilization while a requirement of the operation task is met. In this way, blockage caused by a large quantity of vehicles on the main road can be avoided, and operation efficiency is indirectly improved.

When the first operation includes selecting a to-be-updated map element on the first map, the client may generate, in response to the operation of selecting, by the user, the to-be-updated map element on the first map displayed on the UI, the first message carrying the map update instruction. As described above, the map update instruction may indicate to update the to-be-updated map element. In this possible implementation, the UI of the client needs to provide, for the user, an interface for selecting the to-be-updated map element on the map displayed on the UI, so that the client can obtain information about the to-be-updated map element selected by the user. Correspondingly, when the first message received by the map server carries the map update instruction, update of the map element on the first map by the map server may be understood as update of the map element on the first map by the map server based on an operation of manually modifying the road network topology structure of the first map by the user. This manner may be referred to as manual map update for short.

Optionally, in the manner of manual map update, to be specific, when the first operation includes selecting the to-be-updated map element on the first map, and the first message carries the map update instruction, that the client generates a first message in response to a first operation of the user on a UI includes: The client converts pixel coordinates of the to-be-updated map element into map coordinates in response to selecting the to-be-updated map element on the UI by the user; and the client generates the map update instruction based on the map coordinates, where the map update instruction carries map coordinate information of the to-be-updated map element.

In this implementation, the user may select the to-be-updated map element on the UI of the client based on personal experience and the operation task. In this case, the client may convert the pixel coordinates of the to-be-updated map element into the map coordinates in response to selecting the to-be-updated map element by the user, and generate the first message carrying the map update instruction that carries the map coordinate information.

Optionally, in the foregoing manner of manual map update, the first operation further includes selecting an update position of the to-be-updated map element on the first map; and the map update instruction further carries map coordinate information of the update position, where the map coordinate information of the update position indicates a position for updating the to-be-updated map element.

In this possible implementation, the user may not only select the to-be-updated map element, but also specify an update position of the to-be-updated map element, so that a road network topology structure of the updated map is closer to an expectation of the user. Refer to FIG. 5. For example, if a road is to be split, in (a) in FIG. 5, a position indicated by a black arrow is an update position of a to-be-updated road specified by the user. In other words, the user specifies that the road is split from the position indicated by the black arrow. The client may generate, based on the split position specified by the user, an effect of a split road shown in (b) in FIG. 5, and present the effect to the user on the UI of the client, so that the user can determine, based on the presented effect, whether to split the road from the position.

In this case, an interface for automatic map update and an interface for manual map update are provided for the user on the UI of the client, so that the user can flexibly select a map update manner based on a requirement.

In step 420, the client sends the first message to the map server. Correspondingly, the map server receives the first message from the client.

After generating the corresponding first message based on the first operation, the client may send the first message to the map server, to indicate the map server to update the road network topology structure of the first map. Correspondingly, the map server may receive the first message from the client.

In step 430, the map server updates the road network topology structure of the first map based on the first message, to obtain a second map.

After receiving the first message, the map server may update the road network topology structure of the first map based on the information carried in the first message, to obtain the second map.

Based on the foregoing technical content, the client may interact with the user through the UI, and provide, on the UI of the client, an interface for dynamically modifying a road network topology interface of the map for the user. The client generates, in response to the operation of the user, the first message indicating the map server to update the road network topology structure of the map, so that after receiving the first message, the map server may update the road network topology structure of the map based on the first message. In this way, the map can be flexibly applied to various operation task scenarios.

In a possible implementation, the method 400 further includes step 440. In step 440, the map server sends the second map.

The map server may send the second map to the client, and correspondingly, the client may receive the second map from the map server. After the client receives the second map from the map server, the client may update the locally stored or displayed first map to the second map.

The map server may also send the second map to the vehicle. Correspondingly, the vehicle may also receive the second map from the map server. After the vehicle receives the second map from the map server, for example, in step 450 shown in FIG. 4, the vehicle may update a first map stored or displayed on the vehicle to the second map.

Based on the foregoing technical content, the vehicle may receive the second map obtained through updating the first map by the map server, and update the locally stored first map to the second map. In this way, the vehicle can work based on the latest map, and the updated map is more applicable to a current operation task. In addition, the vehicle does not need to calculate a map element that needs to be updated, so that calculation pressure of the vehicle can be reduced, operation efficiency can be improved, and driving safety of the vehicle can be improved.

In a possible implementation, the method may further include: The vehicle sends indication information to the map server.

The indication information may indicate that a part or the entirety of a driving path of the vehicle is not a map element on the second map, so that the map server performs map update.

In this implementation, the vehicle may have a capability of autonomously discovering a map element not displayed on the map. When the vehicle determines that an area in front of the vehicle matches a mobility capability of the vehicle, the vehicle may generate indication information indicating that a part or the entirety of the driving path of the vehicle is not a map element on the second map, and send the indication information to the map server. It should be understood that the mobility capability of the vehicle may be understood as a capability of the vehicle to travel over an obstacle in a complex road or a roadless area, a capability to make a turn within a minimum area, and the like. Whether the mobility capability of the vehicle is matched may be determined based on a minimum ground clearance, an approach angle, a departure angle, a longitudinal passing radius, a fording depth, a minimum turning radius, and the like of the vehicle. This is not limited in embodiments of this application.

After the vehicle sends the indication information to the map server, correspondingly, the map server may receive the indication information from the vehicle, and the map server may update the second map based on the indication information.

It should be understood that, in this embodiment of this application, the first map is a to-be-updated map, and the second map is a new map obtained through updating the to-be-updated map. After the second map is obtained, the second map covers the first map, in other words, the second map other than the first map is applied to the operation scenario. It should be further understood that when an updated map needs to be updated again, the map is a to-be-updated map, that is, the map becomes a first map.

In this implementation, the vehicle has the capability of autonomously discovering a passable map element, and may indicate the map server to perform update by sending, to the map server, indication information indicating a new map element, so that the map can further meet an operation requirement, and operation efficiency is improved.

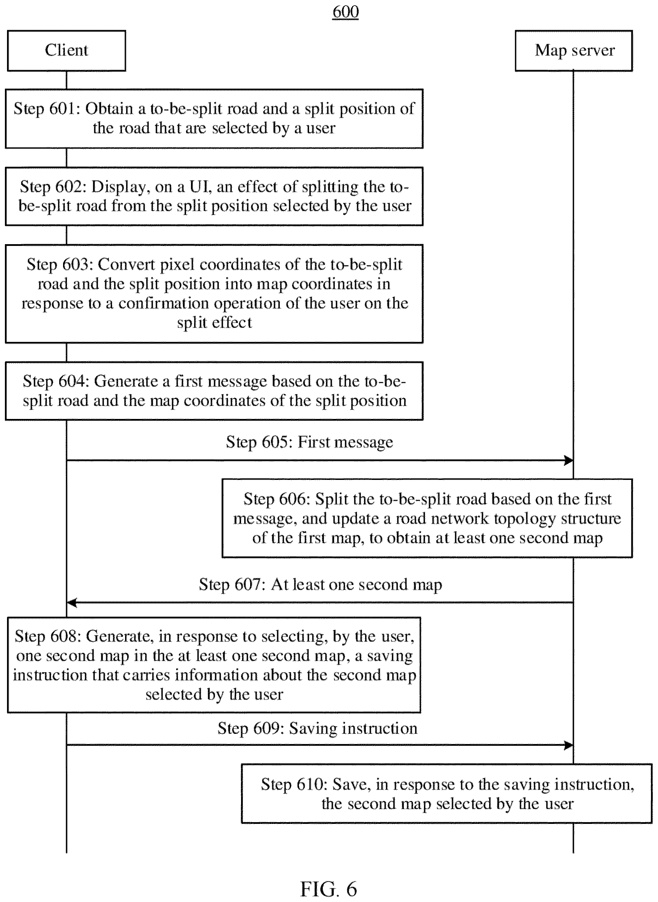

For example, with reference to a flowchart of a method shown in FIG. 6, the following describes implementation details of updating a map in a case of road split in the map update method provided in an embodiment of this application.

As shown in FIG. 6, the method 600 may include step 601 to step 610.

In step 601, a client may obtain a to-be-split road and a split position of the road that are selected by a user.

For example, the user may tap, on a UI of the client, a to-be-split road on a first map and a split position from which the road is to be split. After the user taps the to-be-split road and the split position of the road, the client may obtain, in response to the tap operation of the user, the to-be-split road and the split position of the road that are selected by the user.

In step 602, the client may display, on the UI, an effect of splitting the to-be-split road from the split position selected by the user.

For example, the split effect of the road displayed by the client on the UI may be a road split effect in (b) in FIG. 5, or the to-be-split road and the split position of the road that are selected by the user may be highlighted on the UI. As long as the to-be-split road and the to-be-split position that are selected by the user can be distinguished from a display effect of another map element on the map, this is not limited in embodiments of this application.

In step 603, the client may convert pixel coordinates of the to-be-split road and the split position into map coordinates in response to a confirmation operation of the user on the split effect.

In step 604, the client may generate a first message based on the to-be-split road and the map coordinates of the split position.

For example, the first message may carry a map update instruction, and the map update instruction may carry information about map coordinates of the to-be-split road and the split position.

In step 605, the client may send the first message to the map server. Correspondingly, the map server may receive the first message from the client.

In step 606, the map server may split the to-be-split road based on the first message, and update a road network topology structure of the first map, to obtain the at least one second map.

For example, the road shown in (b) in FIG. 5 is interrupted from the split position selected by the user, and then two dead-end roads are formed. In other words, in a case in which the vehicle travels on the road on the left side of the split position shown in the figure, the vehicle cannot continue travelling when the vehicle moves to the split position. In addition, because the road is a unidirectional upstream road or a unidirectional downstream road, the vehicle can only travel according to a passage attribute of the road indicated by an arrow. Therefore, the vehicle cannot make a U-turn or move back. In this case, when only split processing is performed on the position of the road, an operation task requirement cannot be met. Therefore, when determining that the manner of only splitting the road is not feasible, the map server may add some virtual map elements to the map, so that the two dead-end roads can be connected to other map elements, to ensure that there is no dead-end road on the map and that the vehicle can travel normally.

There may be at least one solution for the map server to update the road network topology structure of the first map, that is, the map server may generate at least one second map.

In step 607, the map server may send the at least one second map to the client. Correspondingly, the client may receive at least one second map from the map server.

After receiving the at least one second map, the client may present the at least one second map to the user on the UI.

In step 608, the client may generate, in response to selecting, by the user, one second map in the at least one second map, a saving instruction that carries information about the second map selected by the user.

The user may select the one second map from the at least one second map presented by the client on the UI. The client may generate a saving instruction in response to selecting or determining the one second map in the at least one second map by the user, where the saving instruction carries the information about the second map selected by the user, and the saving instruction indicates the map server to save the second map selected by the user.

In step 609, the client may send the saving instruction to the map server. Correspondingly, the map server may receive a saving instruction from the client.

In step 610, the map server may save, in response to the saving instruction, the second map selected by the user.

It should be understood that the method 600 shown in FIG. 6 is merely an example. In an actual application scenario, as long as it is ensured that the road network topology structure of the first map can be updated through interaction between the client and the map service and that the second map can be obtained, some interaction steps may be added or reduced between the client and the map server based on an actual operation status. This is not limited in embodiments of this application.

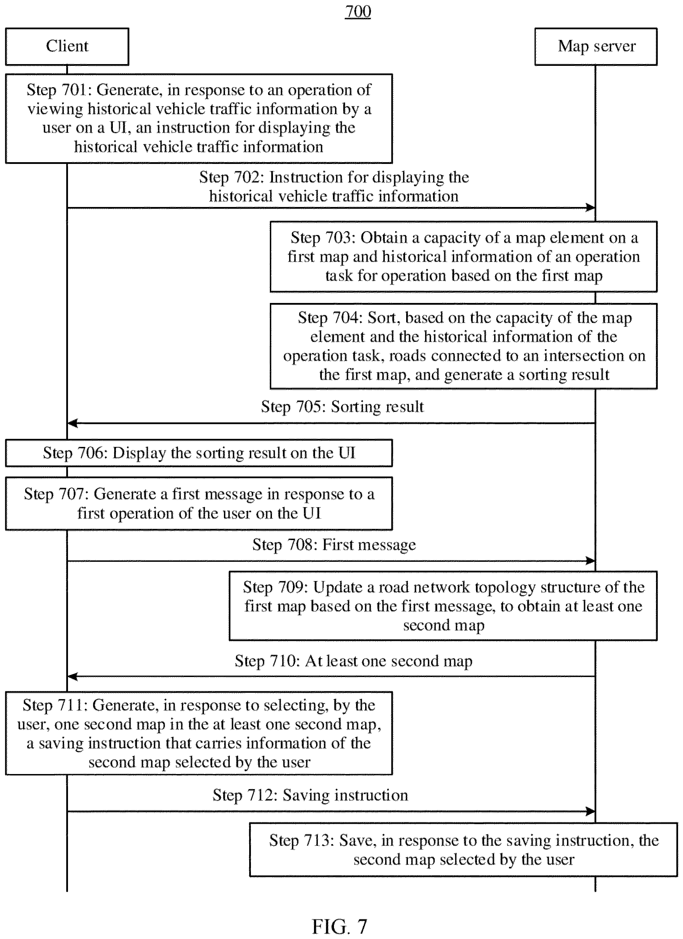

For example, with reference to a flowchart of a method shown in FIG. 7, the following describes implementation details of updating a map in a case in which vehicle traffic information is used in the map update method provided in an embodiment of this application.

As shown in FIG. 7, the method 700 may include step 701 to step 713.

In step 701, a client may generate, in response to an operation of viewing historical vehicle traffic information by a user on a UI, an instruction for displaying the historical vehicle traffic information.

The user can view the historical vehicle traffic information on the UI of the client to learn about usage of roads in historical operation tasks. This helps the user produce a summary and properly arrange subsequent operation tasks.

The client may generate, in response to the operation of viewing the historical vehicle traffic information by the user, the instruction for displaying the historical vehicle traffic information.

In step 702, the client may send the instruction for displaying the historical vehicle traffic information to the map server. Correspondingly, the map server may receive the instruction for displaying the historical vehicle traffic information from the client.

In step 703, the map server may obtain a capacity of a map element on the first map and historical information about an operation task for operation based on the first map.

The capacity of the map element on the first map may be setting data pre-stored in the map server. The pre-stored setting data may be data that is preset by the user for the first map, or may be data that is automatically set by the map server according to a specific rule. This is not limited in this embodiment of this application.

In step 704, the map server may sort, based on the capacity of the map element and the historical information of the operation task, roads connected to an intersection on the first map, and generate a sorting result. The sorting result includes the historical vehicle traffic information.

A capacity of the intersection may be understood as the capacity of the road connected to the intersection. The sorting result may be that a road whose traffic volume exceeds a capacity ranks high, and a road whose traffic volume does not exceed a capacity ranks low. Alternatively, the sorting result may be that a road whose traffic volume exceeds a capacity ranks low, and a road whose traffic volume does not exceed a capacity ranks high. This is not limited in this application.

In step 705, the map server may send the sorting result to the client. Correspondingly, the client may receive the sorting result from the map server.

In step 706, the client may display the sorting result on the UI.

For example, the client may convert the sorting result received from the map server into a display effect like a text and/or a color, and display the display effect on the UI, for viewing, analysis, and decision-making by the user.

In step 707, the client may generate a first message in response to a first operation of the user on the UI.

For example, the first operation may include selecting a to-be-updated map element on the UI by the user. For example, the first operation includes selecting a to-be-split intersection by the user on the UI, and may further include selecting a split position of the to-be-split intersection.

For example, the first operation may include selecting, by the user on the UI, a button or an interface indicating the map server to automatically update the road network topology structure of the first map. It may also be understood that the client may provide, for the user on the UI, an interface for indicating the map server to perform global optimization on the road network topology structure of the first map.

In step 708, the client may send the first message to the map server. Correspondingly, the map server may receive the first message from the client.

In step 709, the map server may update the road network topology structure of the first map based on the first message, to obtain the at least one second map.

When the first operation in step 707 includes selecting, by the user on the UI, the to-be-split intersection and the split position of the to-be-split intersection, in step 709, the map server may further determine or verify feasibility of the split solution, in other words, determine or verify whether there is a dead-end road in the updated road network topology structure and whether a mobility capability of the vehicle is met. If the split solution is not feasible, the map server may inform, on the UI of the client, the user that the split solution is not feasible, and the map server may optimize the split solution based on the split solution indicated by the user. In this way, there is no dead-end road in the road network topology structure of the updated map, and the updated map meets the mobility capability of the vehicle and is presented to the user on the UI of the client. The user may determine to use a map provided by the map server, or may indicate the map server to update the map through the client. If the split solution is feasible, the map server may directly present, to the user on the UI of the client, a map obtained through update according to the split solution. This part of content is merely example content but is not restrictive content.

When the first operation in step 707 includes an operation of indicating the map server to perform global optimization on the road network topology structure of the first map, in step 709, the map server may update the road network topology structure of the first map with reference to parameter information such as a right of way parameter of a road on the first map, a passage attribute, and a capacity of a road and/or intersection.

Step 710 to step 713 in FIG. 7 are the same as step 607 to step 610 in FIG. 6. For brevity, details are not described herein again. For related detailed descriptions, refer to step 607 to step 610 in FIG. 6.

It should be understood that the method 700 shown in FIG. 7 is merely an example. In an actual application scenario, as long as it is ensured that the road network topology structure of the first map can be updated through interaction between the client and the map service and that the second map can be obtained, some interaction steps may be added or reduced between the client and the map server based on an actual operation status. This is not limited in embodiments of this application.

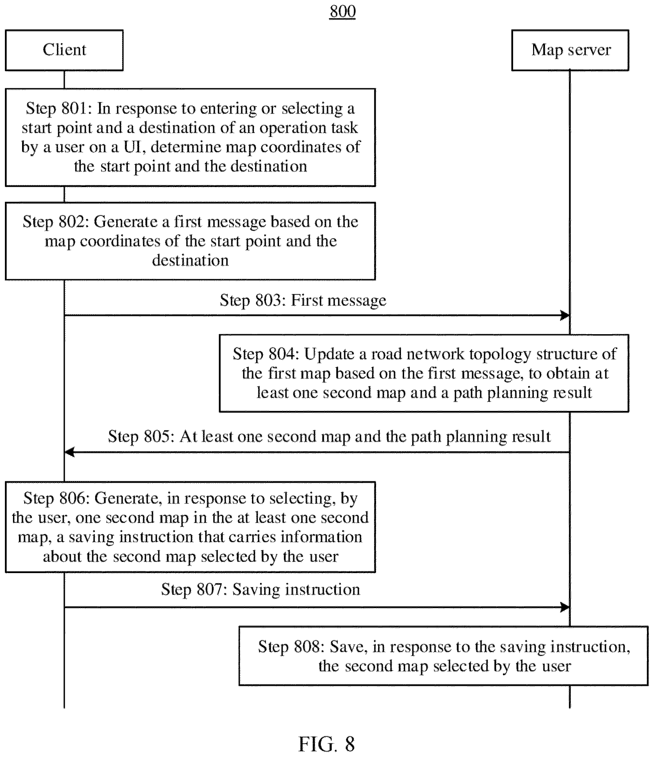

For example, with reference to a flowchart of a method shown in FIG. 8, the following describes implementation details of updating a map in a case of operation task uploading in the map update method provided in this application.

As shown in FIG. 8, the method 800 may include step 801 to step 808.

In step 801, in response to entering or selecting a start point and a destination of an operation task by a user on a UI, a client may determine map coordinates of the start point and the destination.

The client may convert, based on the start point and the destination that are of the operation task and that are entered or selected by the user, pixel coordinates of pixels corresponding to the start point and the destination that are on the first map displayed on the UI into map coordinates represented in a form of longitude and latitude.

In step 802, the client may generate a first message based on the map coordinates of the start point and the destination.

The first message may carry the map coordinate information of the start point and the destination of the operation task. The first message may indicate the map server to update a road network topology structure of the first map, and may further indicate the map server to plan a path from the start point to the destination based on the start point and the destination.

Optionally, when the user enters the start point and the destination of the operation task on the first map, the client may determine the pixel coordinates of the start point and the destination. The first message may carry the pixel coordinate information of the start point and the destination of the operation task. After the map server receives the first message, the map server may convert the pixel coordinates of the start point and the destination into the map coordinates of the start point and the destination. This is not limited in this embodiment of this application.

In step 803, the client may send the first message to the map server. Correspondingly, the map server may receive the first message from the client.

In step 804, the map server may update the road network topology structure of the first map based on the first message, to obtain the at least one second map and a path planning result.

For example, after receiving the first message, the map server may first determine whether the start point and the destination are reachable from each other in the road network topology structure of the first map. If the start point and the destination are reachable from each other, the map server may plan at least one passable path based on the road network topology structure of the first map, and add at least one virtual map element based on the start point and the destination, so that costs (which may be a passage time or a passage distance) of passage from the start point to the destination is not less than passage costs of the passable path that is based on the road network topology structure of the first map. In other words, when the map server determines that the start point and the destination are reachable from each other, the path planning result includes at least one passable path that is based on the road network topology structure of the first map and at least one passable path that is updated based on the road network topology structure of the first map and that includes the added virtual map element. If the start point and the destination are not reachable from each other, the map server may inform the user that the start point and the destination are not reachable from each other on the UI of the client, and the map server may update the road network topology structure of the first map and add a virtual map element to the first map, so that the start point and the node are reachable from each other. In this case, the path planning result includes at least one passable path that is updated based on the road network topology structure of the first map and that includes the added virtual map element.

In step 805, the map server may send the at least one second map and the path planning result to the client. Correspondingly, the client may receive the at least one second map and the path planning result from the map server.

Step 806 to step 808 in FIG. 8 are the same as step 608 to step 610 in FIG. 6. For brevity, details are not described herein again. For related detailed descriptions, refer to step 608 to step 610 in FIG. 6.

It should be understood that the method 800 shown in FIG. 8 is merely an example. In an actual application scenario, as long as it is ensured that the road network topology structure of the first map can be updated through interaction between the client and the map service and that the second map can be obtained, some interaction steps may be added or reduced between the client and the map server based on an actual operation status. This is not limited in embodiments of this application.

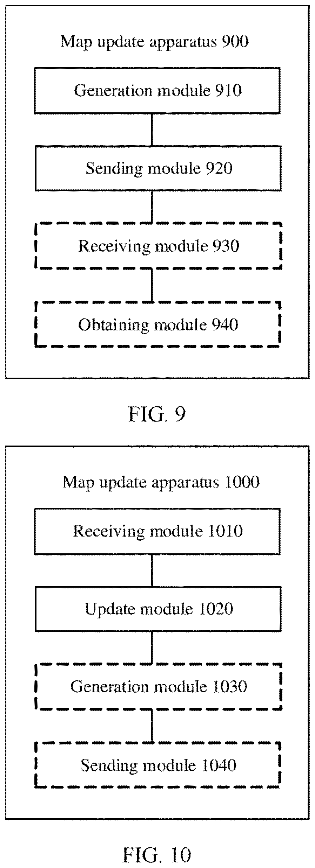

The methods provided in embodiments of this application are described above in detail with reference to FIG. 4 to FIG. 8. Apparatuses provided in embodiments of this application are described below in detail with reference to FIG. 9 to FIG. 12.

FIG. 9 is a schematic block diagram of a map update apparatus according to an embodiment of this application.

As shown in FIG. 9, the map update apparatus 900 may include a generation module 910 and a sending module 920. The map update apparatus 900 may be configured to perform the steps of the client in any one of the method embodiments of the method 400, the method 600, the method 700, and the method 800.

For example, when the map update apparatus 900 is configured to perform the steps of the client in the method 400, the map update apparatus 900 may perform step 410, step 420, and step 440 in the method 400. When the map update apparatus 900 is configured to perform the steps of the client in the method 600, the map update apparatus 900 may perform step 601 to step 605 and step 607 to step 609 in the method 600. When the map update apparatus 900 is configured to perform the steps of the client in the method 700, the map update apparatus 900 may perform step 701, step 702, step 705 to step 708, and step 710 to step 712 in the method 700. When the map update apparatus 900 is configured to perform the steps of the client in the method 800, the map update apparatus 900 may perform step 801 to step 803 and step 805 to step 807 in the method 800.

FIG. 10 is a schematic block diagram of another map update apparatus according to an embodiment of this application.

As shown in FIG. 10, the map update apparatus 1000 may include a receiving module 1010 and an update module 1020. The map update apparatus 1000 may be configured to perform the steps of the map server in any one of the method embodiments of the method 400, the method 600, the method 700, and the method 800.

For example, when the map update apparatus 1000 is configured to perform the steps of the map server in the method 400, the map update apparatus 1000 may perform step 420, step 430, and step 440 in the method 400. When the map update apparatus 1000 is configured to perform the steps of the map server in the method 600, the map update apparatus 1000 may perform step 605 to step 607, step 609, and step 610 in the method 600. When the map update apparatus 1000 is configured to perform the steps of the map server in the method 700, the map update apparatus 1000 may perform step 702 to step 705, step 708 to step 710, step 712, and step 713 in the method 700. When the map update apparatus 1000 is configured to perform the steps of the map server in the method 800, the map update apparatus 1000 may perform step 803 to step 805, step 807, and step 808 in the method 800.

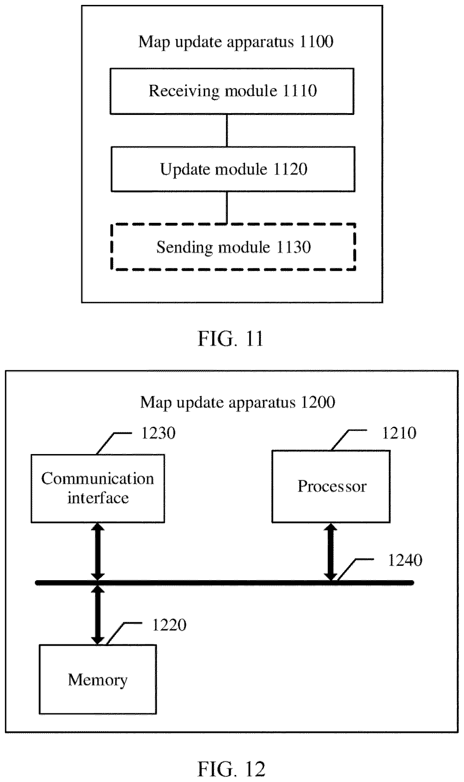

FIG. 11 is a schematic block diagram of still another map update apparatus according to an embodiment of this application.

As shown in FIG. 11, the map update apparatus 1100 may include a receiving module 1110 and an update module 1120. The map update apparatus 1100 may be configured to perform steps of the vehicle in the method 400.

For example, when the map update apparatus 1100 is configured to perform the steps of the vehicle in the method 400, the map update apparatus 1100 may perform step 440 and step 450 in the method 400.

FIG. 12 is a schematic block diagram of yet another map update apparatus according to an embodiment of this application.

The map update apparatus 1200 may be configured to implement functions of the client, the map server, or the vehicle in the method 400, the method 600, the method 700, and the method 800. The map update apparatus 1200 may be a chip system. In this embodiment of this application, the chip system may include a chip, or may include a chip and another discrete component.

As shown in FIG. 12, the map update apparatus 1200 may include at least one processor 1210, configured to implement a function of the client or the map server in any one of the method embodiments of the method 400, the method 600, the method 700, and the method 800 provided in embodiments of this application, or configured to implement the functions of the vehicle in the method 400 provided in embodiments of this application.

For example, when the map update apparatus 1200 is configured to implement the function of the client in the method 400 provided in the embodiment of this application, the processor 1210 may be configured to: generate the first message in response to the first operation of the user on the UI, where the first message indicates to update the road network topology structure of the first map, and the road network topology structure includes at least one of a pose, a size, and a topology relationship of a map element; and send the first message to the map server. For details, refer to the detailed descriptions in the method examples. Details are not described herein again.

For another example, when the map update apparatus 1200 is configured to implement the function of the map server in the method 400 provided in the embodiment of this application, the processor 1210 may be configured to receive the first message from the client, where the first message indicates the map update apparatus 1200 to update the road network topology structure of the first map, and the road network topology structure includes at least one of a pose, a size, and a topology relationship of a map element; and update the road network topology structure of the first map based on the first message, to obtain a second map. For details, refer to the detailed descriptions in the method examples. Details are not described herein again.

For another example, when the map update apparatus 1200 is configured to implement the function of the vehicle in the method 400 provided in this embodiment of this application, the processor 1210 may be configured to: receive the second map from the map server, where the second map is obtained by updating the road network topology structure of the first map, and the road network topology structure includes at least one of a pose, a size, and a topology relationship of a map element; and update the first map to the second map. For details, refer to the detailed descriptions in the method examples. Details are not described herein again.

The map update apparatus 1200 may further include at least one memory 1220, configured to store program instructions and/or data. The memory 1220 is coupled to the processor 1210. The coupling in embodiments of this application may be an indirect coupling or a communication connection between apparatuses, units, or modules in an electrical form, a mechanical form, or another form, and is used for information exchange between the apparatuses, the units, or the modules. The processor 1210 may operate in collaboration with the memory 1220. The processor 1210 may execute the program instructions stored in the memory 1220. At least one of the at least one memory may be included in the processor.

The map update apparatus 1200 may further include a communication interface 1230, configured to communicate with another device by using a transmission medium, so that an apparatus in the map update apparatus 1200 may communicate with the another device. For example, when the map update apparatus 1200 is a client, the another device may be a map server or a vehicle; when the map update apparatus 1200 is a map server, the another device may be a client or a vehicle; or when the map update apparatus 1200 is a vehicle, the another device may be a map server or a client. The communication interface 1230 may be, for example, a transceiver, an interface, a bus, a circuit, or an apparatus that can implement a transceiver function. The processor 1210 may receive and send data and/or information through the communication interface 1230, and is configured to implement the method performed by the client, the map server, or the vehicle in the embodiment corresponding to FIG. 12.

A specific connection medium between the processor 1210, the memory 1220, and the communication interface 1230 is not limited in this embodiment of this application. In this embodiment of this application, in FIG. 12, the processor 1210, the memory 1220, and the communication interface 1230 are connected by using the bus 1240. The bus 1240 is represented by using a thick line in FIG. 12. A connection manner between other components is merely described as an example, and is not limited thereto. The bus may be classified into an address bus, a data bus, a control bus, and the like. For ease of representation, only one thick line is used to represent the bus in FIG. 12, but this does not mean that there is only one bus or only one type of bus.

An embodiment of this application further provides a chip system. The chip system includes at least one processor, configured to implement functions related to the method performed by the client or the map server in any one of the method embodiments shown in FIG. 4, FIG. 6, FIG. 7, and FIG. 8, or configured to implement functions related to the method performed by the vehicle in the embodiment shown in FIG. 4, for example, receive or process data and/or information related to the method.

In a possible design, the chip system further includes a memory, the memory is configured to store program instructions and data, and the memory is located inside the processor or outside the processor.

The chip system may include a chip, or may include a chip and another discrete component.

An embodiment of this application further provides a computer program product. The computer program product includes a computer program (which may also be referred to as code or an instruction). When the computer program is run, a computer is enabled to perform the method performed by the client or the method performed by the map server in the embodiments shown in FIG. 4, FIG. 6, FIG. 7, and FIG. 8, or the computer is enabled to perform the method performed by the vehicle in the embodiment shown in FIG. 4.

An embodiment of this application further provides a computer-readable storage medium. The computer-readable storage medium stores a computer program (which may also be referred to as code or an instruction). When the computer program is run, a computer is enabled to perform the method performed by the client or the map server in any one of the method embodiments shown in FIG. 4, FIG. 6, FIG. 7, and FIG. 8, or the computer is enabled to perform the method performed by the vehicle in the embodiment shown in FIG. 4.

An embodiment of this application further provides a vehicle. The vehicle may be configured to perform the method performed by the vehicle in the embodiment shown in FIG. 4.

It should be understood that the processor in embodiments of this application may be an integrated circuit chip, and has a signal processing capability. In an implementation process, steps in the foregoing method embodiments can be performed by using an integrated logical circuit of hardware in the processor, or by using instructions in a form of software. The processor may further be a general-purpose processor, a digital signal processor (digital signal processor, DSP), an application-specific integrated circuit (Application-Specific Integrated Circuit, ASIC), a field programmable gate array (Field Programmable Gate Array, FPGA), another programmable logic device, a discrete gate, a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or performed and completed by a combination of hardware and a software module in a decoding processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in a plurality of forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memories in the systems and methods described in this specification include but are not limited to these memories and any memory of another appropriate type.

Terms such as "unit" and "module" used in this specification indicate computer-related entities, hardware, firmware, combinations of hardware and software, software, or software being executed.

A person of ordinary skill in the art may be aware that, illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatuses, devices, and methods may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate. The parts displayed as modules may or may not be physical modules, in other words, may be located in one position, or may be distributed on a plurality of network modules. Some or all of the modules may be selected based on an actual requirement to achieve the objectives of the solutions of the embodiments.

In addition, functional modules in embodiments of this application may be integrated into one processing module, or may exist alone physically, or two or more modules are integrated into one module.

In the foregoing embodiments, all or some functions of the functional modules may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A map update method, wherein the method comprises:
generating, by a client, a first message in response to a first operation of a user on a user interface UI, wherein the first message indicates to update a road network topology structure of a first map, and the road network topology structure comprises at least one of a pose, a size, and a topology relationship of a map element; and
sending, by the client, the first message to a map server.

2. The method according to claim 1, wherein the map element comprises a real map element and/or a virtual map element, and updating the road network topology structure of the first map comprises one or more of the following: splitting or deleting one or more map elements on the first map, and adding a virtual map element to the first map.

3. The method according to claim 1 or 2, wherein the first operation comprises uploading an operation task to the client, and the first message carries information about the operation task; or
the first operation comprises selecting a to-be-updated map element on the first map, the first message carries a map update instruction, and the map update instruction indicates to update the to-be-updated map element.

4. The method according to claim 3, wherein the first operation comprises selecting the to-be-updated map element on the first map, and the first message carries the map update instruction; and
the generating, by a client, a first message in response to a first operation of a user on a UI comprises:
converting, by the client, pixel coordinates of the to-be-updated map element into map coordinates in response to selecting, by the user, the to-be-updated map element on the UI; and
generating, by the client, the map update instruction based on the map coordinates, wherein the map update instruction carries map coordinate information of the to-be-updated map element.

5. The method according to claim 4, wherein the first operation further comprises selecting an update position of the to-be-updated map element on the first map, the map update instruction further carries map coordinate information of the update position, and the map coordinate information of the update position indicates a position for updating the to-be-updated map element.

6. The method according to claim 3, wherein the uploading an operation task comprises:
entering or selecting a start point and a destination of the operation task on the first map; and
the generating, by a client, a first message in response to a first operation of a user on a UI comprises:
determining, by the client, map coordinates of the start point and the destination in response to entering or selecting, by the user, the start point and the destination of the operation task on the first map on the UI; and
generating, by the client, the first message based on the map coordinates of the start point and the destination, wherein the first message carries map coordinate information of the start point and the destination.

7. The method according to claim 3 or 6, wherein the method further comprises:
receiving, by the client, a path planning result from the map server, wherein the path planning result indicates a passable path planned for the operation task, and the passable path comprises the virtual map element added to the first map.

8. The method according to claim 3, 6, or 7, wherein the method further comprises:
obtaining, by the client based on one or more operation tasks, one or more of the following parameters: a right of way parameter of each road in a path corresponding to the one or more operation tasks, a passage attribute of each road in the path corresponding to the one or more operation tasks, and a capacity of each road and/or intersection in the path corresponding to the one or more operation tasks; and
sending, by the client, the one or more parameters to the map server, to update the road network topology structure of the first map.

9. The method according to any one of claims 1 to 8, wherein the method further comprises:
receiving, by the client, a second map from the map server, wherein the second map is obtained by the map server by updating the road network topology structure of the first map in response to the first message.

10. A map update method, wherein the method comprises:
receiving, by a map server, a first message from a client, wherein the first message indicates the map server to update a road network topology structure of a first map, and the road network topology structure comprises at least one of a pose, a size, and a topology relationship of a map element; and
updating, by the map server, the road network topology structure of the first map based on the first message, to obtain a second map.

11. The method according to claim 10, wherein the map element comprises a real map element and/or a virtual map element, and updating the road network topology structure of the first map comprises one or more of the following: splitting or deleting one or more map elements on the first map, and adding a virtual map element to the first map.

12. The method according to claim 10 or 11, wherein the first message carries information about an operation task; or
the first message carries a map update instruction, and the map update instruction indicates to update a to-be-updated map element.

13. The method according to claim 12, wherein the first message carries the map update instruction, and the map update instruction carries map coordinate information of the to-be-updated map element.

14. The method according to claim 13, wherein the map update instruction further carries map coordinate information of an update position, and the map coordinate information of the update position indicates a position for updating the to-be-updated map element.

15. The method according to claim 12, wherein the first message carries the information about the operation task, and the first message carries map coordinate information of a start point and a destination of the operation task.

16. The method according to claim 12 or 15, wherein the first message carries the information about the operation task; and
the method further comprises:
generating, by the map server, a path planning result based on the information about the operation task, wherein the path planning result indicates a passable path planned for the operation task, and the passable path comprises the virtual map element added to the first map; and
sending, by the map server, the path planning result to the client.

17. The method according to claim 12, 15, or 16, wherein the method further comprises:
receiving, by the map server, one or more of the following parameters from the client: a right of way parameter of each road in a path corresponding to the one or more operation tasks, a passage attribute of each road in the path corresponding to the one or more operation tasks, and a capacity of each road and/or intersection in the path corresponding to the one or more operation tasks; and
updating, by the map server, the road network topology structure of the first map based on the one or more parameters.

18. The method according to any one of claims 10 to 17, wherein the method further comprises:
sending, by the map server, the second map.

19. The method according to claim 18, wherein the method further comprises:
receiving, by the map server, indication information from a vehicle, wherein the indication information indicates that a part or the entirety of a driving path of the vehicle is not a map element on the second map; and
updating, by the map server, the second map based on the indication information.

20. A map update method, wherein the method comprises:
receiving, by a vehicle, a second map from a map server, wherein the second map is obtained by updating a road network topology structure of a first map, and the road network topology structure comprises at least one of a pose, a size, and a topology relationship of a map element; and
updating, by the vehicle, the first map to the second map.

21. The method according to claim 20, wherein the method further comprises:
sending, by the vehicle, indication information to the map server, wherein the indication information indicates that a part or the entirety of a driving path of the vehicle is not a map element on the second map, so that the map server performs map update.

22. A map update apparatus, wherein the apparatus comprises:
a generation module, configured to generate a first message in response to a first operation of a user on a user interface UI, wherein the first message indicates to update a road network topology structure of a first map, and the road network topology structure comprises at least one of a pose, a size, and a topology relationship of a map element; and
a sending module, configured to send the first message to a map server.

23. The apparatus according to claim 22, wherein the map element comprises a real map element and/or a virtual map element, and updating the road network topology structure of the first map comprises one or more of the following: splitting or deleting one or more map elements on the first map, and adding a virtual map element to the first map.

24. The apparatus according to claim 22 or 23, wherein the first operation comprises uploading an operation task to the apparatus, and the first message carries information about the operation task; or
the first operation comprises selecting a to-be-updated map element on the first map, the first message carries a map update instruction, and the map update instruction indicates to update the to-be-updated map element.

25. The apparatus according to claim 24, wherein the first operation comprises selecting the to-be-updated map element on the first map, and the first message carries the map update instruction; and
the generation module is specifically configured to:
convert pixel coordinates of the to-be-updated map element into map coordinates in response to selecting, by the user, the to-be-updated map element on the UI; and
generate the map update instruction based on the map coordinates, wherein the map update instruction carries map coordinate information of the to-be-updated map element.

26. The apparatus according to claim 25, wherein the first operation further comprises selecting an update position of the to-be-updated map element on the first map, the map update instruction further carries map coordinate information of the update position, and the map coordinate information of the update position indicates a position for updating the to-be-updated map element.

27. The apparatus according to claim 24, wherein the uploading an operation task comprises:
entering or selecting a start point and a destination of the operation task on the first map; and
the generation module is specifically configured to:
determine map coordinates of the start point and the destination in response to entering or selecting, by the user, the start point and the destination of the operation task on the first map on the UI; and
generate the first message based on the map coordinates of the start point and the destination, wherein the first message carries map coordinate information of the start point and the destination.

28. The apparatus according to claim 24 or 27, wherein the apparatus further comprises:
a receiving module, configured to receive a path planning result from the map server, wherein the path planning result indicates a passable path planned for the operation task, and the passable path comprises the virtual map element added to the first map.

29. The apparatus according to claim 24, 27, or 28, wherein the apparatus further comprises:
an obtaining module, configured to obtain, based on one or more operation tasks, one or more of the following parameters: a right of way parameter of each road in a path corresponding to the one or more operation tasks, a passage attribute of each road in the path corresponding to the one or more operation tasks, and a capacity of each road and/or intersection in the path corresponding to the one or more operation tasks, wherein
the sending module is further configured to send the one or more parameters to the map server, to update the road network topology structure of the first map.

30. The apparatus according to any one of claims 22 to 29, wherein the apparatus further comprises:
a receiving module, configured to receive a second map from the map server, wherein the second map is obtained by the map server by updating the road network topology structure of the first map in response to the first message.

31. A map update apparatus, wherein the apparatus comprises:
a receiving module, configured to receive a first message from a client, wherein the first message indicates the apparatus to update a road network topology structure of a first map, and the road network topology structure comprises at least one of a pose, a size, and a topology relationship of a map element; and
an update module, configured to update the road network topology structure of the first map based on the first message, to obtain a second map.

32. The apparatus according to claim 31, wherein the map element comprises a real map element and/or a virtual map element, and updating the road network topology structure of the first map comprises one or more of the following: splitting or deleting one or more map elements on the first map, and adding a virtual map element to the first map.

33. The apparatus according to claim 31 or 32, wherein the first message carries information about an operation task; or
the first message carries a map update instruction, and the map update instruction indicates to update a to-be-updated map element.

34. The apparatus according to claim 33, wherein the first message carries the map update instruction, and the map update instruction carries map coordinate information of the to-be-updated map element.

35. The apparatus according to claim 34, wherein the map update instruction further carries map coordinate information of an update position, and the map coordinate information of the update position indicates a position for updating the to-be-updated map element.

36. The apparatus according to claim 33, wherein the first message carries the information about the operation task, and the first message carries map coordinate information of a start point and a destination of the operation task.

37. The apparatus according to claim 33 or 36, wherein the first message carries the information about the operation task; and
the apparatus further comprises:
a generation module, configured to generate a path planning result based on the information about the operation task, wherein the path planning result indicates a passable path planned for the operation task, and the passable path comprises the virtual map element added to the first map; and
a sending module, configured to send the path planning result to the client.

38. The apparatus according to claim 33, 36, or 37, wherein the receiving module is further configured to receive one or more of the following parameters from the client: a right of way parameter of each road in a path corresponding to the one or more operation tasks, a passage attribute of each road in the path corresponding to the one or more operation tasks, and a capacity of each road and/or intersection in the path corresponding to the one or more operation tasks; and
the update module is further configured to update the road network topology structure of the first map based on the one or more parameters.

39. The apparatus according to any one of claims 31 to 38, wherein the apparatus further comprises:
a sending module, configured to send the second map.

40. The apparatus according to claim 39, wherein the receiving module is further configured to receive indication information from a vehicle, wherein the indication information indicates that a part or the entirety of a driving path of the vehicle is not a map element on the second map; and
the update module is further configured to update the second map based on the indication information.

41. A map update apparatus, wherein the apparatus comprises:
a receiving module, configured to receive a second map from a map server, wherein the second map is obtained by updating a road network topology structure of a first map, and the road network topology structure comprises at least one of a pose, a size, and a topology relationship of a map element; and
an update module, configured to update the first map to the second map.

42. The apparatus according to claim 41, wherein the apparatus further comprises:
a sending module, configured to send indication information to the map server, wherein the indication information indicates that a part or the entirety of a driving path of the apparatus is not a map element on the second map, so that the map server performs map update.

43. A map update apparatus, comprising a processor, wherein the processor executes computer-executable instructions, to implement the method according to any one of claims 1 to 9, or the method according to any one of claims 10 to 19, or the method according to claim 20 or 21.

44. A computer-readable storage medium, comprising a computer program, wherein when the computer program is run on a computer, the computer is enabled to perform the method according to any one of claims 1 to 9, or the computer is enabled to perform the method according to any one of claims 10 to 19, or the computer is enabled to perform the method according to claim 20 or 21.

45. A computer program product, comprising program code, wherein when the program code is run on a computer, the computer is enabled to perform the method according to any one of claims 1 to 9, or the computer is enabled to perform the method according to any one of claims 10 to 19, or the computer is enabled to perform the method according to claim 20 or 21.
